# EUROPÄISCHE PATENTSCHRIFT

(11) **EP 0 538 802 B1**
(45) Veröffentlichungstag und Bekanntmachung des Hinweises auf die Patenterteilung: **28.06.1995**
(21) Anmeldenummer: 92117941.2
(22) Anmeldetag: 20.10.1992
(51) Int. Cl.: B62M 25/08, E05B 47/00, F16H 59/70, B60R 1/06

(54) **Weggeber für einen Stellantrieb, insbesondere in einem Fahrzeug**
Position sensor for a servo-actuator, particularly for a vehicle
Capteur de position pour un servomoteur, notamment pour un véhicule

(30) Priorität: 22.10.1991 DE 4134794
(43) Veröffentlichungstag der Anmeldung: 28.04.1993
(73) Patentinhaber: Fichtel & Sachs AG, D-97419 Schweinfurt (DE)
(72) Erfinder: Fey, Rainer, W-8720 Schweinfurt (DE); Thein, Albert, W-8728 Hassfurt (DE)
(74) Vertreter: Prechtel, Jörg, Dipl.-Phys. Dr.

(56) Entgegenhaltungen:
- EP-A- 0 267 423
- WO-A-88/01962
- DE-A- 3 703 392
- FR-A- 2 247 376
- GB-A- 2 157 387
- US-A- 4 573 723

## Beschreibung

Die Erfindung betrifft einen Stellantrieb mit einem Weggeber, insbesondere in einem Fahrzeug, mit einem Stellmotor und einem insbesondere linear bewegbaren Abtriebsglied des Stellantriebs.

Die GB-A-2157387 offenbart einen Stellantrieb gemäß dem Oberbegriff des Anspruchs 1. Die Weggeber derartiger Stellantriebe dienen dazu, die Istposition des vom Stellantrieb zu bewegenden Teils festzustellen und ein entsprechendes Ist-Signal abzugeben. Dieses Ist-Signal kann dann gewünschtenfalls einer Regeleinrichtung zugeführt werden, die einen Istposition-Sollposition-Vergleich durchführt und bei nicht ausreichender Übereinstimmung entsprechende Maßnahmen trifft, beispielsweise den Stellantrieb dementsprechend nachsteuert, bis die Sollposition erreicht ist.

Bei vielen Anwendungsfällen kommt es auf eine hohe Präzision der Wegmessung an. So muß bei einer Mehrgang-Kettenschaltung für ein Fahrrad eine Positioniergenauigkeit ± 2/10 mm eingehalten werden bei einem Gesamthub von ca. 40 mm (8-Gang Kettenschaltung). Dementsprechend hoch sind die Anforderungen an den Weggeber eines elektrischen Servo-Antriebs für eine derartige Kettenschaltung. Ferner muß ein Weggeber für derartige Anwendungszwecke mechanisch robust sein und kostengünstig fertigbar sein.

Der Erfindung liegt die Aufgabe zugrunde, einen diesen Anforderungen genügenden Stellantrieb bereitzustellen.

Diese Aufgabe wird durch einen gattungsgemäßen Stellantrieb mit den kennzeichnenden Merkmalen des Anspruchs 1 gelöst.

Da der Weggeber erfindungsgemäß unmittelbar in den Kraftweg zwischen Stellmotor und Abtriebsglied einschaltbar ist, führt er zwangsläufigerweise die vom Stellantrieb veranlaßte Verstellbewegung mit durch. Auch dann, wenn die Überlastkupplung momentan wegen zu hoher Belastung des Stellantriebs ausrückt und später wieder ggf. in anderer gegenseitiger Drehstellung der Kupplungsglieder einrückt, erfaßt der Weggeber weiterhin die genaue Stellung des vom Stellantrieb zu bewegenden Teils, da der Weggeber im Kraftweg zwischen dem vom Stellantrieb zu bewegenden Teil und der Überlastkupplung angeordnet ist. Entsprechendes gilt für den Weggeber mit Leerhub-Kupplung, der insbesondere in Zentralverriegelungssystemen für Kraftfahrzeuge einsetzbar ist. Bei derartigen Systemen ermöglicht der Leerhub eine manuelle Betätigung, die ansonsten aufgrund der Schwergängigkeit oder Selbsthemmung des Stellantriebs erschwert oder gar unmöglich wäre. Aufgrund der koaxialen Anordnung von Antriebsglied und Zwischenglied ergibt sich zudem eine vorteilhaft kompakte Bauform.

Zur weiteren Minimierung des Meßfehlers des Weggebers, wird vorgeschlagen, daß eine Vorspanneinrichtung vorgesehen ist, welche das Zwischenglied in eine seiner beiden Bewegungsrichtungen vorspannt. Die Vorspanneinrichtung greift am besten direkt an das vom Stellantrieb zu verstellende Teil (beispielsweise Verstell-Parallelogramm der Mehrgang-Kettenschaltung) an. Die Vorspannung ist dabei so groß gewählt, daß in beiden Bewegungsrichtungen des Stellantriebs stets sämtliche Kraftübertragungsteile zwischen Stellmotor und zu verstellendem Teil unter der Vorspannung stehen und somit spielfrei mit ihren Verzahnungen ineinandergreifen. Zur Reduzierung der Herstellungs- und Montagekosten kann dabei durchaus ein gewisses Bewegungsspiel zwischen aufeinanderfolgenden Getriebeteilen zugelassen sein. Dieses Bewegungsspiel wirkt sich jedoch auf die Genauigkeit der Messung nicht aus, da die Vorspannung bei beiden Bewegungsrichtungen in gleicher Weise die Getriebeteile gegeneinander vorspannt.

Zur weiteren Reduzierung der Herstellungskosten bei kompaktem Gesamtaufbau von Weggeber und Stellantrieb wird vorgeschlagen, daß das Antriebsglied als Schneckenrad für eine mit einer Motorwelle des Stellmotors verbundene Schnecke ausgebildet ist.

Zur Bereitstellung einer einfach aufgebauten und kostengünstig fertigbaren Überlastkupplung wird vorgeschlagen, daß die Überlastkupplung wenigstens ein Rastelement an einem der Glieder Zwischenglied und Antriebsglied sowie ein Gegenrastelement am jeweils anderen Glied aufweist und daß das Rastelement bei Überlast aus dem Gegenrastelement momentan ausrastet zur Entkupplung von Antriebsglied und Zwischenglied.

Besonders bevorzugt ist hierzu vorgesehen, daß das Rastelement von einem vom einen Glied abstehenden, zur Achse des Zwischenglieds parallel verlaufenden und in radialer Richtung elastisch rückfedernden Rastteil gebildet ist, welches in eine das Rastgegenelement bildende Ausnehmung am Außen- oder Innenumfang des anderen Glieds eingreift. Auch kann hierbei vorgesehen sein, daß das Rastteil einen Rastkopf aufweist, welcher das andere Glied hintergreift zur gegenseitigen Fixierung der beiden Glieder nach dem axialen Aufstecken des einen Glieds auf das andere.

Aufgrund der beschriebenen Bauform müssen beim Zusammenbau des Weggebers lediglich Antriebsglied und Zwischenglied dementsprechend axial zusammengesteckt werden. Eine gesonderte gegenseitige axiale Fixierung ist aufgrund der Rastköpfe entbehrlich.

Für den am Zwischenglied angeordneten Signalgeber kommen unterschiedliche Bauformen infrage. So kann ein inkrementales Meßsystem eingesetzt werden, welches während der Drehbewegung auf einen Kreisumfang verteilte Meßmarken abtastet. Diese Meßmarken können am drehenden Zwischenglied angeordnet sein mit dementsprechend ortsfestem Meßmarken-Abtaster oder umgekehrt. Die Meßmarken können optischer Natur sein (Balken oder dergl.) oder auch elektrischer oder magnetischer Natur. Die Abtastsignale werden dann von einem Zähler des Meßsystems gezählt, wobei der Zählstand die Istposition des zu überwachenden Teils angibt. Falls bei einem derartigen System jedoch der momentane Zählerstand verloren geht, beispielsweise aufgrund eines Ausfalls der Versorgungsspannung, kann aus den Abtastsignalen nicht mehr auf die momentane Absolutstellung des zu überwachenden Teils geschlossen werden. Das System ist wieder neu zu eichen indem auf einen definierten Nullpunkt zurückgefahren wird und der Zähler auf Null gestellt wird. Inkrementale Meßsysteme haben u.a. jedoch den Vorteil, daß sie zur Erfassung auch relativ großer Verstellwege geeignet sind.

Zur Bereitstellung eines robusten, einfach fertigbaren und stark untersetzenden Übersetzungsgetriebes wird vorgeschlagen, daß das Untersetzungsgetriebe von einem Planetengetriebe gebildet ist.

Bevorzugt ist hierzu vorgesehen, daß das Zwischenglied einen Sonnenradabschnitt aufweist, daß das Sensorteil als Planetenradträger ausgebildet ist, daß ein Sensorgehäuse vorgesehen ist mit einer Innenumfangsverzahnung, und daß am Planetenradträger drehbar gelagerte Planetenräder in den Sonnenradabschnitt sowie die Innenumfangsverzahnung eingreifen.

Für den die absolute Drehstellung des Sensorteils erfassenden Signalgeber kommen unterschiedliche Bauformen infrage, beispielsweise elektrische Bauformen mit Drehkondensator oder vom Drehwinkel abhängiger Induktivität. Besonders bevorzugt aufgrund kostengünstiger Herstellbarkeit sowie einfacher Signalverarbeitung ist erfindungsgemäß der Einsatz eines Drehpotentiometers im Signalgeber. Das vom Signalgeber abgegebene Signal ist eine Analogspannung, deren Spannungsbetrag dem Drehwinkel eindeutig zugeordnet ist. Bei entsprechend präziser Widerstands-Schleifbahn läßt sich eine exakte Proportionalität zwischen Spannungsbetrag und Weg ohne weiteres erzielen.

In einer bevorzugten Bauform ist vorgesehen, daß das Sensorteil an eine zur Zwischenglied-Achse radial verlaufende Kreisscheibe aufweist, an deren einer Seite die Planetenräder drehbar gelagert sind und deren andere Seite wenigstens eine längs eines zur Achse des Zwischenglieds konzentrischen Kreises verlaufende Schleifbahn aufweist, die von einem an einem Sensorgehäuse angebrachten Schleifkontakt, vorzugsweise Kontaktstift, abtastbar ist. Gegenüber der ebenfalls an sich möglichen alternativen Ausführungsform mit ortsfester Schleifbahn und bewegtem Kontaktstift hat die angegebene Bauform den Vorteil, daß sämtliche elektrischen Leitungen über die ortsfesten Kontaktstifte geführt werden können, also sowohl die Versorgungsspannung wie auch die Sensorspannung und ggf. auch der Masse-Anschluß.

Kompakter, mechanisch robuster Aufbau bei einfacher Montagemöglichkeit wird dadurch gefördert, daß das Sonnenrad als Hohlrad ausgebildet ist. Auch kann eine gemeinsame Lagerwelle für das Zwischenglied sowie das Sensorteil vorgesehen sein.

Der vorstehend beschriebene Weggeber wird bevorzugt in Verbindung mit einem Stellantrieb eingesetzt mit einem als Zahnstange ausgebildeten Abtriebsglied, in die ein Ritzel-Abschnitt des Zwischenglieds eingreift.

Besonders vorteilhaft ist die Verwendung des Stellantriebs mit Weggeber der vorstehend beschriebenen Art mit Überlastkupplung zur Betätigung einer Fahrrad-Schaltung, insbesondere Fahrrad-Kettenschaltung.

Um die hier erforderliche Präzision der Wegerfassung ohne Spiel-Beeinträchtigung zu gewährleisten, wird vorgeschlagen, daß die Vorspanneinrichtung an ein Ketten-Umwerfglied der Kettenschaltung angreift.

Ferner läßt sich der Stellantrieb mit Weggeber der vorstehend beschriebenen Art mit Leerhub-Kupplung mit Vorteil zur Betätigung einer Zentralverriegelung in einem Kraftfahrzeug einsetzen.

Die Erfindung wird im folgenden an einem bevorzugten Ausführungsbeispiel anhand der Zeichnung erläutert. Es zeigt:
- Fig. 1: einen Querschnitt durch einen erfindungsgemäßen Stellantrieb mit Stellmotor und Abtriebsglied; und
- Fig. 2: einen Schnitt der Anordnung in Fig. 1 nach Linie IIA-IIA (linke Hälfte von Fig. 2) bzw. IIB-IIB (rechte Hälfte).

Der im folgenden beschriebene und allgemein mit 10 bezeichnete Weggeber ermöglicht eine absolute Wegerfassung mit hoher Präzision und ist dabei robust und für die Großserienfertigung geeignet. Er läßt sich vielseitig einsetzen, insbesondere bei Fahrzeugen wie Kraftfahrzeugen (hier beispielsweise in Verbindung mit einer Zentralverriegelung) oder bei Fahrrädern zur motorischen Betätigung einer Kettenschaltung. In beiden Anwendungsfällen kommt es auf hohe Zuverlässigkeit bei geringen Gestehungskosten und auch geringem Gewicht an.

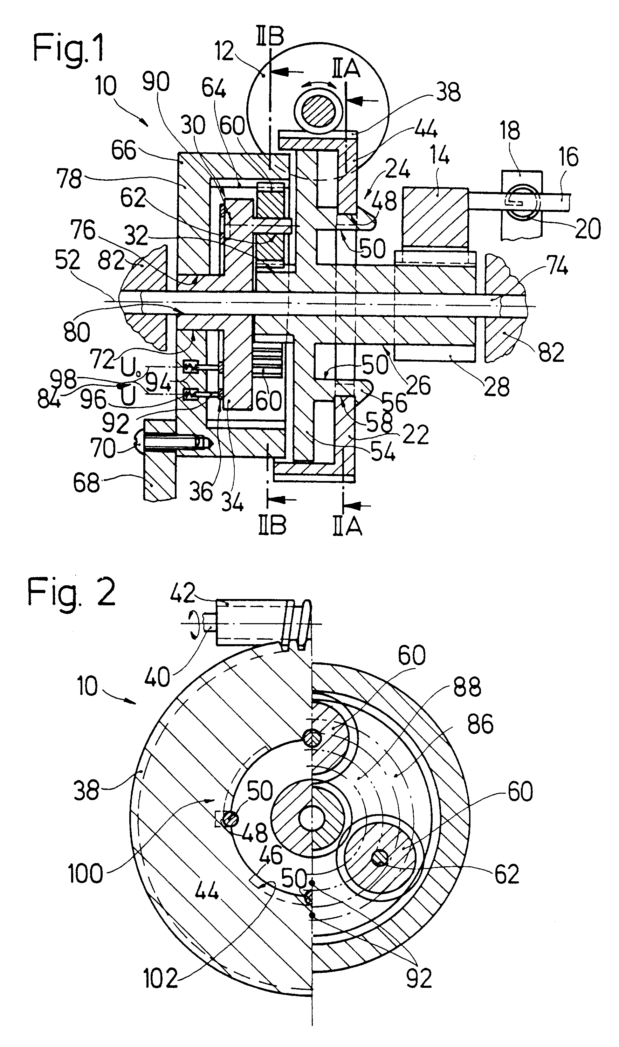

Der Weggeber 10 ist unmittelbar in dem Kraftweg zwischen einem in Fig. 1 vereinfacht dargestellten elektrischen Stellmotor 12 und einem Abtriebsglied in Form einer Zahnstange 14 angeordnet. Diese Zahnstange ist unmittelbar mit dem zu verstellenden Teil 16 angeordnet, welches der Einfachheit halber als Querstange in Fig. 1 symbolisiert ist. Eine zwischen einem ortsfesten Gegenlager 18 und dem zu verstellenden Teil 16 angeordnete Vorspanneinrichtung 20 (symbolisiert durch eine Schrauben-Druckfeder) spannt das Teil 16 und somit die Zahnstange 14 derart vor, daß in beiden möglichen Verstell-Richtungen sämtliche Getriebeteile zwischen Teil 16 und Stellmotor 12 unter Vorspannung ineinandergreifen. Es liegen also stets die gleichen Anlageflächen, insbesondere Zahnflanken, aufeinanderfolgender Teile aneinander an, so daß ein etwaiges Bewegungsspiel zwischen aufeinanderfolgenden Getriebeteilen sich nicht auf die Wegmessung des Weggebers 10 auswirken.

Der Stellantrieb 10 umfaßt ein vom Stellmotor 12 antreibbares Antriebsglied 22, welches wiederum ein Zwischenglied 26 über eine Überlastkupplung 24 antreibt. Dieses Zwischenglied hat mehrere Funktionen. Zum einen treibt es über einen Ritzelabschnitt 28 unmittelbar die Zahnstange 14. Zum anderen treibt es ein Untersetzungsgetriebe in Form eines Planetengetriebes 30 an, und zwar über einen Sonnenradabschnitt 32. Das Planetengetriebe 30 dient der Untersetzung der Drehbewegung des Zwischenglieds 26 derart, daß sich ein Planetenradträger 34 des Planetengetriebes 30 während des vollen Verschiebewegs der Zahnstange 14 um etwas weniger als 360° dreht. Der Planetenradträger 34 ist Teil eines Drehpotentiometers 36. Die abgegriffene Potentiometerspannung U ist also stets der jeweiligen Zahnstangenposition eindeutig zuordenbar.

Die Überlastkupplung 24 verhindert eine Beschädigung von Teilen des Stellantriebs oder der angeschlossenen, vom Stellantrieb zu verstellenden Einrichtung, beispielsweise Mehrgang-Kettenschaltung. Die Überlastkupplung kann von einer reinen Reibungskupplung gebildet sein, da eine Änderung der gegenseitigen Drehorientierung der Kupplungsteile nach einer Überlastung sich nicht auf die Genauigkeit der Wegmessung auswirkt. Dies liegt darin, daß der Weggeber 10 nicht die Drehposition des Antriebsmotors 12 erfaßt, sondern die tatsächliche Position der Zahnstange 14 und damit des zu verstellenden Teils 16.

Bevorzugt wird jedoch die in den Figuren dargestellte Überlastkupplung 24 mit lösbarer Verrastung zwischen den Kupplungsteilen eingesetzt, die sich durch schlupffreien Betrieb im Normalfall, einfache Herstellbarkeit sowie gut festlegbares Auslösemoment auszeichnet.

Das hohlradförmige Antriebsglied 22 ist an seinem Außenumfang mit einer Schneckenradverzahnung 38 ausgebildet, in welche eine an einer Motorwelle 40 des Stellmotors 12 drehfest angebrachte Schnecke 42 eingreift. Der radial verlaufende Boden 44 des hohlradförmigen Antriebsglieds 22 weist eine zentrale Kreisöffnung 46 auf mit mehreren, beispielsweise halbkreisförmigen Rastausnehmungen 48. Im dargestellten Ausführungsbeispiel sind vier derartige Rastausnehmungen 48 gleichmäßig auf den Umfang der Kreisöffnung 46 verteilt. Diese Rastausnehmungen 48 dienen der teilweisen Aufnahme von stiftförmigen Rastteilen 50. Diese stehen in Richtung parallel zu einer sämtlichen drehenden Elementen des Weggebers 10 gemeinsamen Achse 52 von einer radial verlaufenden Kreisscheibe 54 als Teil des Zwischenglieds 26 ab. Die Rastteile sind quer zu ihrer jeweiligen Längsrichtung federnd und elastisch nachgiebig ausgebildet. Bei Überlast schwenken die Rastteile 50 folglich aus den Rastausnehmungen 48 heraus radial nach innen, so daß Antriebsglied 44 und Zwischenglied 26 gegeneinander verdreht werden können. Bei entsprechender Weiterverdrehung bzw. Rückdrehung beider Teile rasten die Rastteile 50 wiederum in die Rastausnehmungen 48 ein.

Im dargestellten Ausführungsbeispiel ist das Antriebsglied 44 unmittelbar auf das Zwischenglied 26 in axialer Richtung aufsteckbar und dann vom Zwischenglied 26 gehaltert. Dies ergibt auch eine besonders kompakte Bauform. Wie die Figuren zeigen, befindet sich die Kreisscheibe 54 des Zwischenglieds 26 im zusammengebauten Zustand innerhalb der Hohlradöffnung des Antriebsglieds 44, wobei der Außenumfang der Kreisscheibe 54 als Lagerfläche für den Innenumfang des Hohlrads dienen kann. An den äußeren Enden der Rastteile vorgesehene abgeschrägte Rastköpfe dienen der axialen Fixierung des Antriebsglieds 44 am Zwischenglied 26, ggf. unterstützt durch eine der Dicke der Bodenwand 44 des Antriebsteils 22 angepaßten Ausnehmung 58 an jedem Rastteil 50. Aufgrund der radial nach außen hin abfallenden Abschrägung der Rastköpfe 48 ist das Zusammenstecken ohne weiteres möglich.

Das Planetengetriebe 30 dient der Untersetzung der Drehbewegung des Zwischenglieds 26, und zwar derart, daß sich der Planetenradträger 34 während des Gesamthubs der Bewegung der Zahnstange 14 weniger als 360° verdreht, so daß jeder Drehposition des Planetenradträgers 34 eindeutig eine bestimmte Zahnstangenposition zugeordnet ist. Der Planetenradträger 34 besteht aus einer mit dem übrigen Zwischenglied 26 einstückigen radial verlaufenden Ringscheibe, an deren in Fig. 1 rechten Seite Planetenräder 60 (im dargestellten Ausführungsbeispiel insgesamt drei) an Achsstummeln 62 drehbar gelagert sind. Diese Planetenräder greifen einerseits in die Verzahnung des bereits genannten Sonnenradabschnitts 32 des Zwischenglieds 26 ein und andererseits in eine Innenumfangsverzahnung 64 eines hohlradförmigen Sensorgehäuses 66. Das Sensorgehäuse ist ortsfest, wie symbolisch durch die Anbringung des Sensorgehäuses 66 an einer abgebrochen dargestellten Gehäusehalterung 68 mittels Befestigungsschraube 70 in Fig. 1, links unten angedeutet ist. Das Sensorgehäuse 66 wird geringfügig vom ebenfalls hohlradförmigen Antriebsglied 24 übergriffen, so daß sich eine axial kurzbauende Bauform ergibt. Hierzu trägt auch bei, daß der Planetenradträger 34 einen in Fig. 1 nach links vorstehenden Lagerbund 72 aufweist, der von einer gemeinsamen Lagerwelle 74 von Planetenradträger 34 und Zwischenglied 26 durchsetzt wird und der in eine dementsprechend dimensionierte zentrale Lagerbohrung 76 des Hohlradbodens 78 des Sensorgehäuses 66 eingeschoben ist. Der Lagerbund 72 vergrößert die innere Lagerfläche 80 unter Erhöhung der Kippsteifigkeit; da er in die Bodenwand 78 eindringt, ergibt sich keine Vergrößerung der axialen Baulänge. Die gemeinsame Lagerwelle 74 kann einseitig oder, besser, zweiseitig gelagert sein, wie in Fig. 1 mit abgebrochen angedeuteten Wellenlagern 82 angedeutet ist.

Der Planetenradträger 34 bildet ein bewegliches Sensorteil eines allgemein mit 84 bezeichneten Signalgebers. Der Signalgeber liefert ein die momentane Drehstellung des Planetenradträgers 34 angebendes Signal U, aus welchem unmittelbar die momentane Position der Zahnstange 14 ableitbar ist. Hierzu ist der Signalgeber 84 mit dem bereits erwähnten Drehpotentiometer 36 ausgebildet, wobei die zugehörige Schleifbahn 86 im dargestellten bevorzugten Ausführungsbeispiel am bewegten Teil (hier Planetenradträger 34) angeordnet ist und ein zugehöriger Schleifkontakt am ortsfesten Sensorgehäuse 66.

Die Schleifbahn 84 sowie eine weitere von einer der Spannungsquelle mit der Ausgangsspannung U₀ beaufschlagte, durchmesserverringerte Schleifbahn 88 verlaufen beide auf der von den Planetenrädern 60 abgewandten Seite des kreisscheibenförmigen Planetenradträgers 34, und zwar konzentrisch zu der durch die gemeinsame Lagerwelle 74 definierten Achse 52. Wie in Fig. 1, oben durch eine Verbindungsleitung 90 angedeutet ist, besteht in einer Winkelstellung eine leitende Verbindung zwischen den Schleifbahnen 86 und 88. An einer weiteren, nicht dargestellten Stelle ist die Schleifbahn 86 mit Massepotential verbunden. Beide Verbindungsstellen liegen bevorzugt unmittelbar nebeneinander mit Auftrennung der Schleifbahn 86 zwischen beiden Verbindungsstellen. Auf diese Weise erhält man bei einer knapp vollen 360°-Drehung (z.B. 270°, besser 350°) eine Variation der abgegriffenen Spannung U zwischen Massepotential und Maximalspannung U₀.

Die den beiden Schleifbahnen 86 und 88 jeweils zugeordneten Schleifkontakte sind im dargestellten Ausführungsbeispiel als Kontaktstifte 92 ausgeführt, die zur Anlage an den Schleifbahnen federvorgespannt sind (durch Druckfedern 94 in Fig. 1 symbolisiert) und die jeweils in einer dementsprechend abgestuften Ausnehmung 96 des Bodens 78 des Sensorgehäuses 66 parallel zur Achse 52 verschiebbar geführt sind. Die zugeordneten elektrischen Anschlußleitungen sind in Fig. 1 jeweils mit einer Strich-Punkt-Linie angedeutet und mit 98 bezeichnet.

Die vorstehend beschriebene Anordnung eignet sich aufgrund ihrer kompakten und dabei robusten Bauform insbesondere für Zweirad-Kettenschaltungen als Teil eines elektrischen Servo-Antriebs. Aufgrund der präzisen Wegerfassung ist die erforderliche hohe Einstellgenauigkeit beim Schalten gewährleistet. Aufgrund der angesprochenen Vorteile sind jedoch auch andere Einsatzarten möglich. So kann auch an den Einsatz im Rahmen von Stellantrieben in einem Kraftfahrzeug gedacht werden. Ein bevorzugtes Anwendungsbeispiel ist der Einsatz bei einem ZV-Antrieb (= Zentral-Verriegelungs-Antrieb).

Bei ZV-Antrieben muß im allgemeinen in der Verriegelungs-Position eine manuelle Entriegelung möglich sein. Wenn man der Einfachheit halber einen einzigen Stellantrieb zur Positionsverstellung zwischen den drei Positionen Frei-Verriegelung-Zentralsicherung einsetzen will, muß in der Stellung Verriegelung der Stellantrieb von der Zentralverriegelungsmechanik entkoppelt werden. Der Grund hierfür liegt darin, daß der Stellantrieb im allgemeinen selbsthemmend ausgebildet ist, zumindest jedoch schwergängig. Um diese Entkopplung in einfacher Weise zu realisieren, ist zusätzlich oder alternativ zur Überlastkupplung 24 eine Leerhub-Kupplung vorgesehen. Bei einem Übergang aus der Stellung "frei" in die Stellung "Verriegelung" bewegt der Stellantrieb die Verriegelungsmechanik zuerst aus der Stellung "frei" in die Stellung "Verriegelung". Anschließend fährt der Stellantrieb in Richtung zur Stellung "frei" entsprechend dem Leerhub zurück. Wird nun die Zentralverriegelung manuell von der Stellung "Verriegelung" in die Stellung "frei" bewegt, so wird bei dieser Bewegung zwar über die Zahnstange 14 das Zwischenglied 26 mitbewegt und somit auch das Drehpotentiometer 36 des Signalgebers. Das Antriebsglied 22 sowie das anschließende Schneckengetriebe samt Antriebsmotor 12 wird jedoch nicht in Bewegung gesetzt.
Eine mögliche Ausführungsform der Leerhub-Kupplung ist in Fig. 2, linke Hälfte angedeutet und mit 100 bezeichnet. Der Leerhub wird hier durch in eine in Umfangsrichtung längliche, strichliert angedeutete Mitnahme-Ausnehmung 102 am Innenumfang des Bodens 44 des hohlradförmigen Antriebsglieds 22 realisiert, in die jeweils einer der im Querschnitt kreisförmigen, stiftförmigen Rastteile 50 eingreift. Jedem der Stifte 50 ist eine entsprechende bogenförmige Ausnehmung 102 zugeordnet, so daß sich ein Leerhub entsprechend der Bogenlänge (abzüglich des Durchmessers des jeweiligen Rastteils 50) ergibt. In dieser Ausführungsform dient die Leerhub-Kupplung 100 gleichzeitig als Überlast-Kupplung in beiden möglichen Endstellungen, da, wie vorstehend beschrieben, bei Überlast die Stifte 50 radial nach innen ausweichen können.

Die vorstehend beschriebene Anordnung hat den Vorteil, daß ein relativ preiswertes Drehpotentiometer 36 verwendet werden kann, welches zudem gemeinsam mit dem Ritzelabschnitt 28 des Zwischenglieds 26 "getrimmt" werden kann, d.h. im zusammengebauten Zustand auf einen vorgegebenen Widerstandsverlauf durch entsprechende Nachbearbeitung der Schleifbahn 86 gebracht werden kann. Auch wird die genaue Position der Zahnstange 14 bei Entkopplung durch Überlast bzw. Leerhub-Bewegung stets genau erkannt. Aufgrund des beschriebenen Ineinandergreifens der hohlradförmigen Bauteile ergibt sich eine kompakte Bauform. Aufgrund der Vorspannung mit Hilfe der Vorspanneinrichtung 20 wirken sich Fertigungsungenauigkeiten, insbesondere Bewegungsspiel, zwischen aufeinanderfolgenden Getriebegliedern nicht auf das Signal des Signalgebers 84 aus. Schließlich wird auch stets die Absolutposition der Zahnstange 14 ermittelt, unabhängig von etwaigem zwischenzeitlichem Spannungsausfall.

## Patentansprüche

1. Stellantrieb mit einem Weggeber, insbesondere für ein Fahrzeug, umfassend:
- einen Stellmotor (12),
- ein vom Stellmotor (12) antreibbares, drehbar gelagertes Antriebsglied (22),
- ein insbesondere linear bewegbares Abtriebsglied (14),
- zum Antriebsglied (22) koaxial drehbar gelagertes und an das Abtriebsglied angreifendes Zwischenglied (26),
- eine Kupplungseinrichtung,
- einen am Zwischenglied (26) angeordneten Signalgeber (84), welcher die momentane Drehstellung des Zwischenglieds (26) ermittelt und ein diese Drehstellung angebendes Signal (U) abgibt,
- ein Untersetzungsgetriebe,
dadurch gekennzeichnet,
- daß die Kupplungseinrichtung (24;100) eine Überlastkupplung (24) und/oder eine Leerhub-Kupplung (100) umfaßt, über welche das Zwischenglied (26) mit dem Antriebsglied (22) verbunden ist,
- daß das Untersetzungsgetriebe zwischen dem Zwischenglied (26) und einem koaxial zum Zwischenglied (26) drehbar gelagerten Sensorteil (34) angeordnet ist,
- daß das Untersetzungsgetriebe die Drehung des Sensorteils (34) auf eine Drehung von maximal 360° einschränkt, und
- daß der Signalgeber (84) die momentane absolute Drehstellung des Sensorteils (34) erfaßt.

2. Stellantrieb nach Anspruch 1, **dadurch gekennzeichnet,** daß eine Vorspanneinrichtung (20) vorgesehen ist, welche das Zwischenglied (26) in eine seiner beiden Bewegungsrichtungen vorspannt.

3. Stellantrieb nach Anspruch 1 oder 2, **dadurch gekennzeichnet** , daß das Antriebsglied (22) als Schneckenrad für eine mit einer Motorwelle (40) des Stellmotors (12) drehfest verbundene Schnecke (42) ausgebildet ist.

4. Stellantrieb nach einem der vorhergehenden Ansprüche, **dadurch gekennzeichnet**, daß die Überlastkupplung (24) wenigstens ein Rastelement an einem der Glieder Zwischenglied (26) und Antriebsglied (22) sowie ein Gegenrastelement am jeweils anderen Glied aufweist und daß das Rastelement bei Überlast aus dem Gegenrastelement momentan ausrastet zur Entkupplung von Antriebsglied (22) und Zwischenglied (26).

5. Stellantrieb nach Anspruch 4, **dadurch gekennzeichnet**, daß das Rastelement von einem vom einen Glied (26) abstehenden, zur Achse (52) des Zwischenglieds (26) parallel verlaufenden und in radialer Richtung elastisch rückfedernden Rastteil (50) gebildet ist, welches in eine das Rastgegenelement bildende Ausnehmung (48) am Außen- oder Innenumfang des anderen Glieds eingreift.

6. Stellantrieb nach Anspruch 5, **dadurch gekennzeichnet**, daß das Rastteil einen Rastkopf (56) aufweist, welcher das andere Glied hintergreift (22) zur gegenseitigen Fixierung der beiden Glieder (22,26) nach dem axialen Aufstecken des einen Glieds auf das andere.

7. Stellantrieb nach einem der Ansprüche 1-6, **dadurch gekennzeichnet**, daß das Untersetzungsgetriebe von einem Planetengetriebe (30) gebildet ist.

8. Stellantrieb nach Anspruch 7, **dadurch gekennzeichnet**, daß das Zwischenglied (26) einen Sonnenradabschnitt (32) aufweist, daß das Sensorteil als Planetenradträger (34) ausgebildet ist, daß ein Sensorgehäuse (66) vorgesehen ist mit einer Innenumfangsverzahnung (62), und daß am Planetenradträger (34) drehbar gelagerte Planetenräder (60) in den Sonnenradabschnitt (32) sowie die Innenumfangsverzahnung (62) eingreifen.

9. Stellantrieb nach einem der Ansprüche 1-6, **dadurch gekennzeichnet**, daß der Signalgeber (84) ein Dreh-Potentiometer (36) umfaßt.

10. Stellantrieb nach Anspruch 9, **dadurch gekennzeichnet**, daß das Sensorteil eine zur Zwischenglied-Achse (52) radial verlaufende Kreisscheibe aufweist, an deren einer Seite die Planetenräder (60) drehbar gelagert sind und deren andere Seite wenigstens eine längs eines zur Achse des Zwischenglieds (26) konzentrischen Kreises verlaufende Schleifbahn (86,88) aufweist, die von einem an einem Sensorgehäuse (66) angebrachten Schleifkontakt, vorzugsweise Kontaktstift (92), abtastbar ist.

11. Stellantrieb nach einem der Ansprüche 8 bis 10, **dadurch gekennzeichnet**, daß das Sensorgehäuse (66) als Hohlrad ausgebildet ist.

12. Stellantrieb nach einem der vorhergehenden Ansprüche, **gekennzeichnet** durch eine gemeinsame Lagerwelle (74) für das Zwischenglied (26) sowie das Sensorteil.

13. Stellantrieb mit einem Weggeber nach einem der vorhergehenden Ansprüche mit einem als Zahnstange (14) ausgebildeten Abtriebsglied, in die ein Ritzelabschnitt des Zwischenglieds (26) eingreift.

14. Verwendung des Stellantriebs mit Weggeber nach einem der vorhergehenden Ansprüche mit Überlastkupplung (24) zur Betätigung einer Fahrradschaltung, insbesondere Fahrrad-Kettenschaltung.

15. Verwendung nach Anspruch 14, wobei die Vorspanneinrichtung (20) nach Anspruch 2 an ein Kettenumwerfglied der Kettenschaltung angreift.

16. Verwendung des Stellantriebs mit Weggeber nach einem der Ansprüche 1 - 13 mit Leerhub-Kupplung (100) zur Betätigung einer Zentralverriegelung in einem Kraftfahrzeug.

## Claims

1. Actuating drive with a displacement sensor, in particular for a vehicle, comprising:
- an actuating motor (12),
- a rotatably mounted drive member (22) drivable by the actuating motor (12),
- an in particular linearly displaceable driven member (14),
- an intermediate member (26) mounted to be coaxially rotatable with respect to the drive member (22) engaging the driven member,
- a clutching device,
- a signal sensor (84) arranged on the intermediate member (26) which detects the instantaneous rotary position of the intermediate member (26) and emits a signal (U) indicating this rotary position,
- a reduction gear,
characterised in that,
- the coupling device (24; 100) comprises an overload clutch (24) and/or a return stroke clutch (100) by which the intermediate member (26) is connected to the drive member (22)
- the reduction gear is arranged between the intermediate member (26) and a sensor member (34) rotatably mounted coaxially with respect to the intermediate member (26),
- the reduction gear restricts the rotation of the sensor member (34) to a maximum rotation of 360°,
- the signal sensor (84) detects the instantaneous absolute rotary position of the sensor member (34).

2. Actuating drive according to claim 1, characterised in that a prestressing device (20) is provided, which prestresses the intermediate member (26) in one of its two directions of motion.

3. Actuating drive according to claim 1 or 2, characterised in that the drive member (22) is constructed as a worm wheel for a worm (42) connected to resist rotation to a motor shaft (40) of the actuating motor (12).

4. Actuating drive according to one of the preceding claims, characterised in that the overload clutch (24) has at least one detent element on one of the members intermediate member (26) and drive member (22) and a counterpart detent element on the respective other member and that the detent element instantaneously releases from the counterpart detent element on overloading to decouple the drive member (22) and the intermediate member (26).

5. Actuating drive according to claim 4, characterised in that the detent element is a detent member (50) projecting from one member (26), extending parallel to the axis (52) of the intermediate member (26) and being elastically resilient in a radial direction, which engages a recess (48) forming the detent counterpart element provided on the outer or inner circumference of the other member.

6. Actuating drive according to claim 5, characterised in that the detent part has a detent head (56), which engages the other member (22) from behind for the mutual fixation of both members (22, 26) after one member (22) has been axially fitted onto the other.

7. Actuating drive according to one of claims 1-6, characterised in chat the reduction gear is formed by planetary gear (30).

8. Actuating drive according to claim 7, characterised in that the intermediate member (26) has a sun wheel segment (32) that the sensor member is constructed as a planet carrier (34), that a sensor housing (66) is provided with teeth on the inner circumference (62), and that on the planet carrier (34) rotatably mounted planetary gears (60) mesh with the sun wheel segment (32) and the inner circumference teeth (62).

9. Actuating drive according to one of claims 1-6, characterised in that the signal sensor (84) comprises a rotary potentiometer (36).

10. Actuating drive according to claim 9, characterised in that the sensor member has a circular disc, extending radially with respect to the intermediate member axis (52), on one side of which the planetary gears (60) are rotatably mounted and on the other side of which at least one contact track (86, 88) is provided, extending along a circle concentric to the axis of the intermediate member (26) which is traceable by a sliding contact attached to a sensor housing (66) preferably a connector pin (92).

11. Actuating drive according to one of claims 8 to 10, characterised in that the sensor housing (66) is constructed as a hollow wheel.

12. Actuating drive according one of the preceding claims, characterised by a joint bearing shaft (74) for both the intermediate member (26) and sensor member.

13. Actuating drive with a displacement sensor according to one of the preceding claims with a driven member constructed as a gear rack (14) with which a pinion segment of the intermediate member (26) meshes.

14. Use of the actuating drive with displacement sensor according to one of the preceding claims with an overload clutch (24) for operating a bicycle gear system, in particular a bicycle chain gear system.

15. Use according to claim 14, wherein the prestressing device (20) according to claim 2 engages a chain change over member of the chain connection.

16. Use of the actuating drive with displacement sensor according to one of claims 1-13 with a return-stroke clutch (100) for actuating a central locking system in a motor vehicle.

## Revendications

1. Mécanisme de positionnement avec un capteur de distance, en particulier pour un véhicule, comportant:
- un servomoteur (12),
- un organe moteur monté tournant, entraîné par le servomoteur (12),
- un organe mené (14) déplaçable en particulier linéairement,
- un organe intermédiaire (26) monté tournant coaxialement à l'organe moteur (22) et agissant sur l'organe mené,
- un dispositif d'accouplement,
- un émetteur de signaux (84) placé sur l'organe intermédiaire (26), qui détermine la position de rotation momentanée de l'organe intermédiaire (26) et délivre un signal (U) indiquant cette position de rotation,
- un démultiplicateur,
caractérisé en ce que
- le dispositif d'accouplement (24 ; 100) comporte un accouplement de surcharge (24) et/ou un accouplement à course à vide (100), par lequel l'organe intermédiaire (26) est relié à l'organe moteur (22),
- le démultiplicateur est placé entre l'organe intermédiaire (26) et un détecteur (34) monté tournant coaxialement à l'organe intermédiaire (26),
- le démultiplicateur limite la rotation du détecteur (34) à une rotation de 360° au maximum, et
- l'émetteur de signaux (84) enregistre la position de rotation absolue momentanée du détecteur (34).

2. Mécanisme de positionnement selon la revendication 1, caractérisé en ce qu'il est prévu un dispositif de précontrainte (20), qui précontraint l'organe intermédiaire (26) dans l'un de ses deux sens de déplacement.

3. Mécanisme de positionnement selon la revendication 1 ou 2, caractérisé en ce que l'organe moteur (22) est réalisé sous la forme d'une roue à denture hélicoïdale pour une vis sans fin (42) reliée solidaire en rotation à un arbre moteur (40) du servomoteur (12).

4. Mécanisme de positionnement selon l'une des revendications précédentes, caractérisé en ce que l'accouplement de surcharge (24) comporte au moins un élément d'encliquetage sur l'un des organes que sont l'organe intermédiaire (26) et l'organe moteur (22), ainsi qu'un contre-élément d'encliquetage sur l'autre organe et en ce que l'élément d'encliquetage se décroche momentanément du contre-élément d'encliquetage, en cas de surcharge, en vue du désaccouplement de l'organe moteur (22) et de l'organe intermédiaire (26).

5. Mécanisme de positionnement selon la revendication 4, caractérisé en ce que l'élément d'encliquetage est formé par une pièce d'encliquetage (50) faisant saillie d'un organe (26), s'étendant parallèlement à l'axe (52) de l'organe intermédiaire (26) et se détendant élastiquement dans la direction radiale, laquelle pièce d'encliquetage s'engage dans un évidement (48), formant le contre-élément d'encliquetage, sur le pourtour extérieur ou intérieur de l'autre organe.

6. Mécanisme de positionnement selon la revendication 5, caractérisé en ce que la pièce d'encliquetage présente une tête d'encliquetage (56), qui passe derrière l'autre organe (22), en vue de la fixation réciproque des deux organes (22, 26), après emboîtement d'un organe sur l'autre.

7. Mécanisme de positionnement selon l'une des revendications 1 à 6, caractérisé en ce que le démultiplicateur est formé par un engrenage planétaire (30).

8. Mécanisme de positionnement selon la revendication 7, caractérisé en ce que l'organe intermédiaire (26) comporte une partie de roue solaire (32), en ce que le détecteur est réalisé sous la forme d'un porte-satellites (34), en ce qu'un boîtier de détecteur (66) est prévu avec une denture périphérique intérieure (62) et en ce que des roues satellites (60), montées tournantes sur le porte-satellites (34), s'engagent dans la partie de roue solaire (32) ainsi que dans la denture périphérique intérieure (62).

9. Mécanisme de positionnement selon l'une des revendications 1 à 6, caractérisé en ce que l'émetteur de signaux (84) comporte un potentiomètre tournant (36).

10. Mécanisme de positionnement selon la revendication 9, caractérisé en ce que le détecteur comporte un disque circulaire s'étendant radialement par rapport à l'axe (52) de l'organe intermédiaire, disque sur un côté duquel sont montées tournantes les roues satellites (60) et dont l'autre côté comporte au moins une voie de frottement (86, 88), s'étendant le long d'un cercle concentrique à l'axe de l'organe intermédiaire (26), cette voie pouvant être palpée par un contact frottant, de préférence un doigt de contact (92), fixé sur un boîtier de détecteur (66).

11. Mécanisme de positionnement selon l'une des revendications 8 à 10, caractérisé en ce que le boîtier de détecteur (66) est une roue creuse.

12. Mécanisme de positionnement selon l'une des revendications précédentes, caractérisé par un arbre d'appui (74) commun pour l'organe intermédiaire (26) et le détecteur.

13. Mécanisme de positionnement avec un capteur de distance selon l'une des revendications précédentes comportant un organe mené, réalisé sous la forme d'une crémaillère (14), dans laquelle s'engage une partie de pignon de l'organe intermédiaire (26).

14. Utilisation du mécanisme de positionnement avec capteur de distance selon l'une des revendications précédentes avec accouplement de surcharge (24) en vue de l'actionnement d'une commande de bicyclette, en particulier d'un dérailleur de bicyclette.

15. Utilisation selon la revendication 14 dans laquelle le dispositif de précontrainte (20) selon la revendication 2 agit sur un organe de poussée de chaîne du dérailleur.

16. Utilisation du mécanisme de positionnement avec capteur de distance selon l'une des revendications 1 à 13 avec accouplement à course à vide (100) en vue de l'actionnement d'un verrouillage centralisé d'un véhicule automobile.
